# EUROPEAN PATENT APPLICATION

(11) **EP 4 335 723 A1**
(43) Date of publication of application: **13.03.2024**
(21) Application number: 23189914.7
(22) Date of filing: 07.08.2023
(51) Int. Cl.: B61L 15/00

(54) **VEHICLE SAFETY SYSTEM AND METHOD**

(30) Priority: 06.09.2022 US 202263404009 P; 29.06.2023 US 202318344250
(71) Applicant: Transportation IP Holdings, LLC, Norwalk, CT 06851 (US)
(72) Inventor: Chandrasekaran, Shankar, Norwalk, CT 06851 (US); Price, Matthew, Norwalk, CT 06851 (US); Singh, Satendra Kumar, Norwalk, CT 06851 (US); Murugesan, Rajasekaran, Norwalk, CT 06851 (US)
(74) Representative: Laufhütte, Dieter

(57) **Abstract**

The present disclosure relates generally to a vehicle safety system. The vehicle safety system may include operational sensors sensing operational characteristics of a vehicle, environmental sensors sensing environmental characteristics of an environment external to the vehicle, and one or more processors. The operational and environmental sensors may output operational and environmental data based on the operational and environmental characteristics that are sensed by the respective sensors. The processors may examine the operational and environmental data to determine whether the vehicle is in a safe state for an onboard operator of the vehicle to exit the vehicle while avoiding the vehicle rolling away from a stationary state. The processors may examine the operational and environmental data to determine whether the vehicle is not in the safe state and may generate one or more notifications to the operator in response to determining that the vehicle is not in the safe state.

## Description

### CROSS-REFERENCE TO RELATED APPLICATIONS

This application claims priority to U.S. Provisional Application No. 63/404,009, filed on September 6, 2022, the entire disclosure of which is incorporated herein by reference.

### BACKGROUND

### Technical Field.

The subject matter described herein relates to electronic vehicle safety systems.

### Discussion of Art.

Modem vehicles including automobiles, boats, and locomotives often include various safety devices including emergency alert (or alerter) and control systems. An alerter system may be an especially common safety device for locomotives. Alerter systems may be used to verify that the locomotive engineer remains vigilant and capable of accomplishing the tasks that he or she must perform while operating a locomotive. An alerter system must operate as intended when present on a locomotive. Similar devices may be used for other vehicle operators or pilots including automobile drivers and boat pilots.

The alerter system can help ensure operational safety of a locomotive and prevent catastrophic damages due to operator fatigue. Some known alerter systems operate by monitoring for movement of a vehicle (e.g., a locomotive) that exceeds a minimum threshold. Once the movement reaches the minimum threshold speed, the alerter system is enabled to generate an alarm and notify of the movement. These alerter systems may require a manual reset by an operator at frequent intervals once activated.

There have been incidents in the past when a braking system, however, was inadvertently disabled when initially applied. This event can cause an undetected roll away of the vehicle (e.g., train). Some known alerter systems may be incapable of detecting these events.

It may be desirable to have an alert or alerter system and method that differ from those that are currently available.

### BRIEF SUMMARY

In accordance with one example or aspect, a vehicle safety system is provided that includes operational sensors, environmental sensors and one or more processors. The operational sensors may sense one or more operational characteristics of a vehicle and output operational data based on the one or more operational characteristics that are sensed. The environmental sensors may sense one or more environmental characteristics of an environment external to the vehicle and may output environmental data based on the one or more environmental characteristics that are sensed. The one or more processors may examine the operational data and the environmental data to determine whether the vehicle may be in a safe state for an onboard operator of the vehicle to exit the vehicle while avoiding the vehicle rolling away from a stationary state. The one or more processors may examine the operational data and the environmental data to determine whether the vehicle may not be in the safe state and may generate one or more notifications to the onboard operator in response to determining that the vehicle may not be in the safe state.

In accordance with one example or aspect, a method is provided that includes sensing operational conditions using one or more operational sensors. The operational conditions may be indicative of operation of a vehicle system. The method may include sensing environmental conditions using one or more environmental sensors. The environmental conditions may be indicative of an ambient environment around the vehicle system. The method may include examining the operational conditions and the environmental conditions to determine whether the vehicle system is in a safe state for an onboard operator of the vehicle system to exit the vehicle system while avoiding the vehicle system rolling away from a stationary state. The method may include generating one or more notifications to the operator in response to determining that the vehicle system is not in the safe state.

In accordance with one example or aspect, a vehicle safety system is provided, the vehicle safety system includes a sensing system that may sense and output first data indicative of a presence or absence of an operator onboard a vehicle. The vehicle safety system may include one or more operational conditions indicative of operation of the vehicle and one or more environmental conditions indicative of an ambient environment outside the vehicle. The vehicle safety system may include a logging system that may determine and output second data indicative of whether the operator has sufficient training to control a braking system of the vehicle responsive to the sensing system detecting the presence of the operator onboard the vehicle. The vehicle safety system may include a controller that may examine the first data and the second data to determine whether the operator is authorized and qualified to control the braking system of the vehicle to prevent an unauthorized rollaway of the vehicle following departure of the operator from the vehicle. The controller may generate one or more notifications indicative of a safe state of the vehicle for the operator to leave the vehicle following engagement of the braking system based on the one or more operational conditions, the one or more environmental conditions, and the training of the operator.

### BRIEF DESCRIPTION OF THE DRAWINGS

The subject matter may be understood from reading the following description of non-limiting embodiments, with reference to the attached drawings, wherein below:
Figure 1 illustrates one example of a vehicle safety system;
Figure 2 illustrates operation of the system shown in Figure 1, according to one example;
Figure 3 illustrates one example of operation of a stand-alone version of the safety system shown in Figure 1;
Figure 4 illustrates a flowchart of one example of a method for determining whether a state of a vehicle is safe for the vehicle to be left unattended;
Figure 5 illustrates a flowchart of one example of a method for determining the presence of an operator onboard a vehicle in connection with preventing rollaway of the vehicle once the operator leaves the vehicle; and
Figure 6 illustrates a functional block diagram of an example neural network that can be used by a vehicle safety system, according to one example.

### DETAILED DESCRIPTION

One or more embodiments or examples of a vehicle safety system and method are provided herein. The safety system can include several other systems or subsystems that operate to determine whether the vehicle may be in a state where an operator can safely leave the vehicle with no or decreased risk of the vehicle beginning movement (e.g., roll-away) after the operator leaves the vehicle. While one or more examples herein may describe the vehicle as being a rail vehicle or rail vehicle system, not all examples or embodiments are limited to rail vehicles. Unless expressly disclaimed or stated otherwise, the subject matter described herein extends to multiple types of vehicle systems. These vehicle types may include automobiles, trucks (with or without trailers), buses, marine vessels, aircraft, mining vehicles, agricultural vehicles, or other off highway vehicles. The vehicle systems described herein (rail vehicle systems or other vehicle systems that do not travel on rails or tracks) can be formed from a single vehicle or multiple vehicles. With respect to multi-vehicle systems, the vehicles can be mechanically coupled with each other (e.g., by couplers) or logically coupled but not mechanically coupled. For example, vehicles may be logically but not mechanically coupled when the separate vehicles communicate with each other to coordinate movements of the vehicles with each other so that the vehicles travel together as a group. Vehicle groups may be referred to as a convoy, consist, swarm, fleet, platoon, and train.

The vehicle safety system can include a sensing or operator identification system formed from a suite or array of sensors, such as optical sensors (e.g., a video camera), a proximity sensor (e.g., an infrared sensor, radar, etc.), a logging system, directional wireless sensor(s), strain gage(s) or load cell(s) on vehicle seats (e.g., to detect the presence of an operator), etc. The logging system can capture a unique identification associated with a vehicle operator and optionally the training level of the operator. This information can be used to confirm whether the operator is capable (e.g., trained) of handling a braking system onboard the vehicle. A combination of two or more of the sensors and/or logging system can confirm the presence of trained personnel onboard the vehicle.

One or more of the same or other sensors can detect characteristics of the vehicle and/or environment to determine whether the operator can safely leave the vehicle or if the operator cannot safely leave (e.g., due to the characteristics indicating that the vehicle is at risk to begin rolling away or otherwise moving after the operator leaves the vehicle).

These additional sensors can include a speed sensor that detects the speed of the vehicle to determine whether this speed may exceed a minimum threshold speed. An ambient temperature sensor can detect the ambient temperature to determine whether the ambient temperature may be below freezing (e.g., below zero degrees Centigrade). This detected temperature can indicate whether the brake system (e.g., an air brake system) of the vehicle can avoid a change in pressure that may cause the brakes to release. For example, if the temperature drops too far (e.g., below freezing), then there may be insufficient air pressure in the brake system to prevent the vehicle from unintentionally releasing the brakes.

Another sensor can include a signal sensor that may monitor for conduction of an electric signal to a brake control device. This signal sensor can detect the signal that may indicate that the brakes have been engaged before the operator leaves the vehicle. Absent detecting such a signal, the brakes may not have been engaged.

The system can include a brake force sensor that may measure the amount of braking or retardation force generated by the brake system. This measurement can be used to confirm that the brake system has the ability to generate sufficient braking force to stop movement of the vehicle. Examples of a brake force sensor may include one or more pressure sensors that measure pressure inside a brake cylinder, main reservoir, or the like, of the brake system.

The safety system can include an autonomous data processing system to support detection of movement in the event of power disruption and to provide redundancy. This processing system can be capable of processing some or all of the sensor outputs described herein and provide alerts or notifications based on the sensor outputs. These alerts or notifications can be used to generate sounds and/or activate lights onboard the vehicle, and/or to send a signal to an off-board location (e.g., a dispatch or monitoring facility) to warn of potential or detected movement of the vehicle. The processing system can be powered by an energy storage device to ensure that the processing system remains powered even where the rest of the vehicle may not be powered. The energy storage device can include one or more batteries, fuel cells, ultracapacitors, etc.

The safety system can include or communicate with other systems and/or existing sensors. For example, the safety system can communicate with an energy management system, a global navigation satellite system (GNSS) receiver (e.g., a global positioning system, or GPS, receiver), a vehicle control system, or the like. The energy management system can be a system that plans or controls movement of the vehicle to reduce fuel consumption, reduce energy consumption, reduce emissions, or the like. The vehicle control system can be a system that remotely controls propulsion-generating vehicles in a multi-vehicle system, such as locomotives in a train. One example of a vehicle control system may be a distributed power system that may control throttle and/or brake settings of other propulsion-generating vehicles from onboard another propulsion-generating vehicle in the same vehicle system. These other systems and/or sensors can provide information such as location, grade (on which the vehicle is stopped), zones or areas where the vehicle is not permitted to remain stopped with no operators onboard), the makeup of the vehicles in the vehicle system, etc.

The safety system can include a roll call system that may use a combination of the logging system and the sensor outputs to detect the presence of an operator onboard the vehicle system, to verify that the operator may be authorized to be onboard the vehicle system (e.g., based on the unique identifier of the operator), and to verify that the operator may be qualified to operate the brake system of the vehicle system (e.g., based on the training level of the operator).

In operation, the safety system can examine the sensor outputs to determine whether the current conditions of the vehicle are allowable for the vehicle system to be stationary. If these conditions are allowable, then the safety system can activate the roll call system (to detect and verify the presence of an authorized and qualified operator onboard). The safety system can send alerts to off-board locations (e.g., a remote monitoring and dispatch facility, identified or designated persons, etc.) responsive to the roll call system detecting the absence (or presence) of an operator, the vehicle beginning to move, the sensed conditions not being allowable for the vehicle system to be stationary without an onboard operator, etc.

The safety system can facilitate or manage a handshake between different systems (e.g., the brake system and the vehicle control system) when the operator may have to leave the vehicle to ensure that the vehicle can be safely left without any onboard operator. This handshake may involve the systems communicating with each other to ensure that the conditions may be allowable and the state of the systems permits the operator to leave the vehicle system. If the operator can safely leave the vehicle system, the safety system can provide a visual and/or audible confirmation to notify the operator and/or provide a message to a remote monitoring and diagnostics system (e.g., a text message, email message, or the like). The safety system also can generate a visual and/or audible confirmation (or alarm) via an alerter system to warn the operator that he or she cannot leave the vehicle when the conditions do not allow for the operator to leave, and optionally can send a signal to notify others that the operator is not allowed to leave.

The handshake that may be facilitated by the safety system can involve the safety system determining the makeup of the vehicle system from the vehicle control system. This makeup can indicate the number of vehicle(s) in the vehicle system, the location(s) of different vehicles in the vehicle system, the weight of the vehicle system, etc. This information can be used to calculate or estimate a braking force that may be needed to prevent unintended movement of the vehicle system.

The safety system can automatically or direct an operator to manually ensure that sufficient brakes may be applied. For example, the safety system can monitor the settings of the brakes and determine whether the brakes as set or engaged can provide at least the braking force that is calculated as needed (described above). If the safety system determines that sufficient braking force may be supplied by the brakes to prevent unintended movement, the safety system can provide a notification (e.g., audible and/or visual) to notify the operator or an off-board system that sufficient braking force may be supplied by the brakes to permit the operator to safely leave the vehicle system unattended. The safety system may determine whether an acknowledgement of notification may be received (e.g., from the operator onboard the vehicle or from another location). If no such acknowledgement may be received, then the safety system can issue an alert (e.g., an audible alarm) to alert the operator and optionally can send a message to an off-board location, such as a remote monitoring and diagnostics system, to initiate one or more responsive actions (e.g., directing the operator to acknowledge the notification).

The safety system optionally can include a backup power supply (e.g., one or more batteries, fuel cells, or the like) to allow the safety system to repeatedly check on the status of the brakes to ensure that sufficient braking force may continue to be supplied by the brakes (even if a power failure otherwise may occur with another primary or main power supply).

If the safety system detects a change in the brake settings, a change in the amount of braking force supplied by the brakes, or another anomaly (e.g., detected movement of the vehicle system), the safety system can generate a warning signal that warns the operator or an off-board system (e.g., a dispatch or monitoring facility) of the change. This can allow for a response to be implemented, such as one or more operators going onboard to engage the brakes, the safety system automatically changing a setting of the brakes (e.g., to increase the braking force), or the like. Prior to generating such a warning, however, the safety system may communicate with other vehicles or vehicle systems within a designated distance of the location of the vehicle system to determine whether these other vehicles or vehicle systems may be moving along with the detected movement of the vehicle system on which the safety system may be disposed. This can be used to rule out or determine whether the detected movement of the vehicle system having the safety system may be being towed or pushed by the other vehicle or vehicle system(s). For example, the safety system can examine the locations of the vehicles to determine whether the locations may be close to each other (e.g., within a threshold distance), as well as which vehicles may be sending the locations. If different vehicles or vehicle systems may be sending the locations via signals from the different vehicles or vehicle systems, and the locations may be close to each other, then the safety system may determine that the monitored vehicle is being pushed or towed by the other vehicle.

The safety system can provide the notification of the potential anomaly or other issue with the brakes at a time that is based on a monitored characteristic of the brake system. For example, the safety system can monitor changes in air pressure in an air brake system of the vehicle system and, based on a rate of change (e.g., decrease) in the pressure, the safety system can determine when to generate the warning notification. Faster rates of decrease in pressure may cause the safety system to generate the notification earlier than slower rates of decrease.

The monitoring of brake pressure, movement, and the potential movement of other nearby vehicles or vehicle systems may provide a roll away protection schema that the safety system provides while the vehicle system may be left unattended. The safety system may require actuation of an input device (e.g., a button, switch, lever, etc.) periodically or prior to expiration of a timer before activating an alarm or generating the warning notification using the alerter system. In the absence of a reset (e.g., the actuation of the input device), the safety system may generate the warning notification.

The autonomous vehicle safety system can be disposed onboard a vehicle or vehicle system having a drive apparatus (e.g., an engine, alternator or generator, motor(s), etc.) and a braking apparatus (e.g., a brake system, such as an air brake system, a friction brake system, a dynamic or regenerative brake system). The safety system can include a controller or control device that includes hardware circuitry that may be connected with and/or include one or more processors (e.g., microprocessors, integrated circuits, field programmable gate arrays, etc.) that perform the operations described in connection with the safety system. If the controller or control device includes multiple processors, these processors may be located in the same housing or enclosure (e.g., in the same device) or may be distributed among or between two or more housings or enclosures (e.g., in different devices). The multiple processors in the same or different devices may each perform the same functions described herein, or the multiple processors in the same or different devices may share performance of the functions described herein. For example, different processors may perform different sets or groups of the functions described herein. The safety system also can include a plurality of operational sensors functionally connected to the vehicle and the controller. The sensors can provide operational data to the control device that may be used to determine whether the vehicle system may be safely stopped, as described above. The safety system also may include environmental sensors functionally connected to the control device. The environmental sensors can provide environmental data to the control device, such as an ambient temperature, humidity, wind speed, movement of nearby vehicles or vehicle systems, or the like. The control device can modify or otherwise control operation of the drive apparatus and the braking apparatus as a function of the operational data and the environmental data, as described herein.

The safety system may be integrated with a control system or controller of the vehicle or vehicle system. For example, the safety system may rely on electric power from the same source or sources as the control system or controller of the vehicle (e.g., the hardware that controls movement and operation of the vehicle). These sources can include batteries, alternators/generators, fly wheels, super capacitors, catenaries, electrified rails, fuel cells, or the like. Alternatively, the safety system may be a stand alone system or a system capable of being independently powered apart from the controller or control system of the vehicle. For example, a separate power source can be used to power the safety system in the event of a power interruption of the power source that powers the vehicle controller or control system. The safety system may be powered by the primary power source that also powers the vehicle controller or vehicle control system. But in response to an interruption or disruption in the supply of power from this primary power source, the safety system can switch to being powered by one or more other power sources to ensure that the safety system may remain powered while the vehicle or vehicle system may be left unattended (and the power interruption of the primary power source is occurring or has occurred).

The vehicle or vehicle system may be a rail vehicle (e.g., locomotive or train), or may be another type of vehicle, such as an automobile, truck, bus, marine vessel, aircraft, agricultural vehicle, mining vehicle, etc. The operational sensors can include location sensors (e.g., global navigation satellite system receivers, or GNSS receivers, such as global positioning system receivers, or GPS receivers) that may output location information indicative of a location of the vehicle, orientation sensors (e.g., accelerometers, Hall effect sensors, etc.) that may output location information indicative of an orientation and/or vibration of the vehicle, speed sensors (e.g., tachometers, GNSS receivers, etc.) that may output speed information indicative of a moving speed (or lack thereof) of the vehicle, engine sensors (e.g., engine speed sensors) that may output engine information indicative of an operational state or speed of an engine of the vehicle, braking sensors (e.g., pressure sensors) that may output brake information indicative of a state of a brake of the vehicle, obstruction sensors (e.g., radar, LiDAR, cameras, etc.) that may output obstruction information indicative of an obstruction along a path of the vehicle, and pilot sensors (e.g., weight sensors such as dead man switches) that may output operator information indicative of a presence or absence of an operator on the vehicle. The environmental sensors can include ambient temperature sensors, ambient pressure sensors, ambient humidity sensors, ambient precipitation sensors, area maps, and surface sensors. The safety system can include or be connected with an input device as described above. This input device can be connected to the control device, and can include a computer, a smart phone, an Internet database, a button, switch, lever, or the like.

In one example embodiment, a method of controlling a vehicle or a plurality of vehicles may be provided. This method can be used to control any of a variety of the vehicles or vehicle systems described herein. The method may include providing a control device, operational sensors, and environmental sensors all of which may be functionally connected to the vehicle. The operational and environmental sensors may provide data to the control device such that the control device modifies the function of the vehicle drive apparatus and braking apparatus as a function of the operational data and the environmental data the presence of an operator and the unique legal and safety concerns of a particular vehicle, vehicle use, or vehicle environment.

A vehicle may comprise a locomotive, an automobile, a boat, or a plurality of such vehicles. The vehicle operations sensors may include orientation sensors, speed sensors, engine sensors, braking sensors, obstruction sensors, and pilot sensors. The vehicles also may include one or more environmental sensors such as ambient temperature sensors, ambient pressure sensors, ambient humidity sensors, ambient precipitation sensors, area maps, and surface sensors.

The vehicle safety system may further include one or more user inputs for inputting user data into the control device. The user input device may comprise one or more devices such as a computer, smartphone, or Internet database.

In one exemplary embodiment, a vehicle safety system may include a sensing system having one or more sensors, the sensing system may detect a presence of an operator onboard a vehicle, may detect one or more operational conditions of the vehicle or environmental conditions, and may determine whether the operator may have a capability for controlling a braking system of the vehicle. The sensing system may determine whether the capability of the operator and the one or more operational conditions or the environmental conditions may indicate a safe condition for the operator to leave the vehicle with the braking system engaged and the vehicle stationary. The sensing system may generate a notification for one or more of presentation to the operator or sending to an off-board system. The notification may inform the one or more of the operator or the offboard system of the safe condition or an unsafe condition for the operator to leave the vehicle with the braking system engaged.

In the following detailed description, numerous specific details may be set forth to provide a thorough understanding of the present invention. It will be obvious, however, to those skilled in the art that the present invention may be practiced without these specific details. In other instances, well-known structures are not shown in detail to avoid unnecessary obscuring of the present invention.

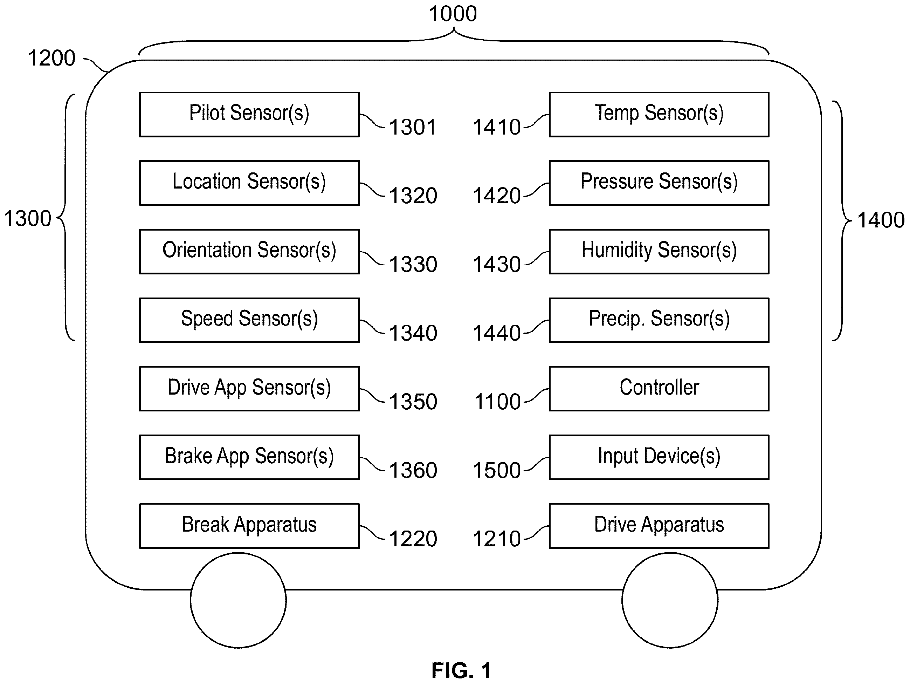

Thus, all the implementations described below are example implementations provided to enable persons skilled in the art to make or use the embodiments of the disclosure and are not intended to limit the scope of the disclosure, which is defined by the claims. As used herein, the word "exemplary" or "illustrative" means "serving as an example, instance, or illustration." Any implementation described herein as "exemplary" or "illustrative" is not necessarily to be construed as preferred or advantageous over other implementations. Moreover, in the present description, the terms "upper," "lower," "left," "rear," "right," "front," "vertical," "horizontal," and derivatives thereof shall relate to the invention as oriented in Figure 1.

While one or more embodiments may be described in connection with a rail vehicle system, not all embodiments are limited to rail vehicle systems. Unless expressly disclaimed or stated otherwise, the inventive subject matter described herein extends to multiple types of vehicle systems. These vehicle types may include automobiles, trucks (with or without trailers), buses, marine vessels, aircraft, mining vehicles, agricultural vehicles, or other off highway vehicles. The vehicle systems described herein (rail vehicle systems or other vehicle systems that do not travel on rails or tracks) can be formed from a single vehicle or multiple vehicles. With respect to multi-vehicle systems, the vehicles can be mechanically coupled with each other (e.g., by couplers) or logically coupled but not mechanically coupled. For example, vehicles may be logically but not mechanically coupled when the separate vehicles communicate with each other to coordinate movements of the vehicles with each other so that the vehicles travel together as a group. Vehicle groups may be referred to as a convoy, consist, swarm, fleet, platoon, and train.

Thus, there is no intention to be bound by any expressed or implied theory presented in the preceding technical field, background, brief summary or the following detailed description. It is also to be understood that the specific devices and processes illustrated in the attached drawings, and described in the following specification, are simply exemplary embodiments of the inventive concepts defined in the appended claims. Hence, specific dimensions and other physical characteristics relating to the embodiments disclosed herein are not to be considered as limiting, unless the claims expressly state otherwise.

Figure 1 illustrates one example of a vehicle safety system 1000. The system may operate in connection with a vehicle 1200 having a drive apparatus 1210 (also referred to as a propulsion system) and a brake apparatus 1220 (also referred to as a brake system). The drive apparatus can represent one or more motors, engines, or the like, that operate to propel the vehicle (or a multi-vehicle system in which the vehicle is disposed). The brake apparatus can represent one or more brakes, such as air brakes, hand brakes, friction brakes, or the like. The vehicle may be functionally connected to a plurality of operational sensors 1300. For example, the controller can include wired or wireless connections between sensors and devices such as control devices such that such sensors and devices can electronically communicate with one another. In wireless settings, the sensors may be hard wired to a power source, use traditional chemical batteries, use rechargeable batteries, or any other practical power source for use with commercial embodiments.

The operational sensors can include one or more pilot sensors 1301 that can detect the presence or absence of an operator. The pilot sensors may include visual sensors to confirm that a pilot (driver or operator) of the vehicle may be present and alert, or otherwise capable of performing the necessary duties of safely operating the vehicle. In one example, the operator may manually drive or control the vehicle. In another example, the vehicle may by driven or controlled autonomously. Visual sensors may include a camera or infrared camera that displays an image to another party, a remote computer, or to a control device 1100 of the system (e.g., one or more processors that operate as described herein, also referred to as a controller). Alternatively, the pilot sensors may comprise or further comprise a strain gauge, pressure sensor, or other sensor to confirm the presence of a pilot or operator in an appropriate position to safely operate the vehicle. As explained in greater detail below, the control device may be adapted to provide a visual and/or audio alert to the pilot or a remote party if the pilot sensor indicates that a pilot may not be present or may not be alert. Alternatively, the control device may be adapted to directly modify or alter the function of the drive apparatus or the brake apparatus.

In one example, multiple outputs from different sensors and/or different types of sensors may be used to verify, calibrate, or confirm a detected presence (or absence) of the operator onboard the vehicle. Instead of relying on a single sensor or a single type of sensor to detect the presence or absence of the operator onboard the vehicle, the outputs from multiple sensors may be used as a failsafe or backup. Different types of sensors may include sensors that use different technologies or different techniques to sense characteristics. Additionally, the calibration of the multiple sensors may be accomplished by implementing a machine learning system or artificial intelligence ("Al") to adjust for noise and variation of the sensor outputs.

As one example, a load cell sensor or strain gauge may be positioned beneath a chair or other seat in which the operator sits onboard the vehicle, beneath a portion of a floor of the vehicle where the operator stands, or the like to detect the presence of the operator. If the load cell sensor or the strain gauge senses weight above a designated threshold, then the load cell sensor or strain gauge may generate output to the controller that indicates the presence of the operator. If no such output may be generated, then the controller may determine that no operator may be present onboard the vehicle. In another example, a camera or infrared sensor may be positioned in view of the area in which the operator may be positioned to operate the vehicle to detect the presence or absence of the operator. If the camera or infrared sensor detects the presence of the operator, then the camera or infrared sensor may generate output to the controller that may indicate the presence of the operator. If no such output may be generated, then the controller may determine that no operator may be present onboard the vehicle or no operator may be presently operating the vehicle. In another example, a proximity sensor or radio frequency identification (RFID) reader may be positioned to detect the movement or presence of the operator in area to operate the vehicle. If the proximity sensor or RFID reader detects the presence of the operator, then the proximity sensor or RFID reader may generate output to the controller that indicates the presence of the operator. If no such output may be generated, then the controller may determine that no operator may be present onboard the vehicle or no operator may be presently operating the vehicle. The sensors may include identification of the operator in the operator position through the PTC login information. Where the operator logs in to the PTC system, the operator may be assumed to be in the operator position.

The outputs from the various sensors may vary during a given trip based on various factors. For example, the load cell sensor beneath the operator's chair may spike or dip based on bumps along the road. In another example, a first operator may switch out with a second operator, where the first operator may be heavier or lighter than the second operator. By using multiple outputs, for example the camera, infrared sensor, proximity sensor, etc., the load cell sensor may be calibrated to account for the variations and noise during the trip. Alternatively, any individual output may be compared to the multiple outputs from the different sensors in order to calibrate for noise, variation, and other abnormalities in order to provide a more accurate determination of the operator's presence or absence onboard the vehicle. As discussed above, the calibration may be done manually or may be done by machine learning or AI. Another advantage of using multiple outputs from different sensors may be that the determination of the presence of the operator may be less reliant on any single sensor. For example, if one sensor may not be responding, the remaining sensors may be relied on to determine the presence of the operator. Additionally, where a sensor may not be responding, an error message may be provided to the operator or to an offboard employee or controller indicating that the sensor may not be responding.

The sensors can include one or more vehicle location sensors 1320. The location sensors may include GPS sensors or other GNSS sensors. The location sensors may be adapted to record or output data indicative of the location of the vehicle. The operational sensors may include orientation sensors 1330 that output data indicative of an orientation of the vehicle. The orientation sensors may include one or more accelerometers and/or pressure sensors located and adapted to obtain the orientation of the vehicle in space. For example, the orientation sensors may be adapted to determine that the vehicle may be level or may not be level in one or more planes.

The operational sensors can include speed sensors 1340 that may output data indicative of moving speeds of the vehicle, such as tachometers, the GNSS sensor described above, or the like. Optionally, the location and speed sensors can be the same sensor (e.g., a GNSS receiver). The operational sensors can include drive apparatus sensors 1350 that may sense or measure engine power output, fuel consumption, battery efficiency in the case of electric motors, or another input or output for the drive apparatus regardless of whether the drive apparatus comprises a gasoline engine, a diesel engine, an electric motor, a hydraulic power source, or a pneumatic power source.

The operational sensors can include brake apparatus sensors 1360 that may detect or measure brake performance, such as brake force, heat loss, brake efficiency, pressure in the brake system, and the like. The operational sensors can collect and record operational data and may communicate the same to the control device of the system.

The system may include environmental sensors 1400 that may measure characteristics of the ambient environment within or around the vehicle. The environmental sensors can include one or more temperature sensors 1410, pressure sensors 1420, humidity sensors 1430, and/or precipitation sensors 1440, which can respectively measure or detect temperatures, pressures, humidity, and precipitation. This sensed information can be communicated from the sensors to the control device. The system may include a user input device 1500 that may be functionally connected to the control device. The user input device may include a computer, smart phone, or other data input device (such as a microphone, keyboard, lever, pedal, button, switch, etc.). The input device may be used to alter the programming of the control device or to provide additional data on the operational environment around the vehicle such as obstructed paths, buildings, surrounding cargo, adverse weather conditions, population data, etc.

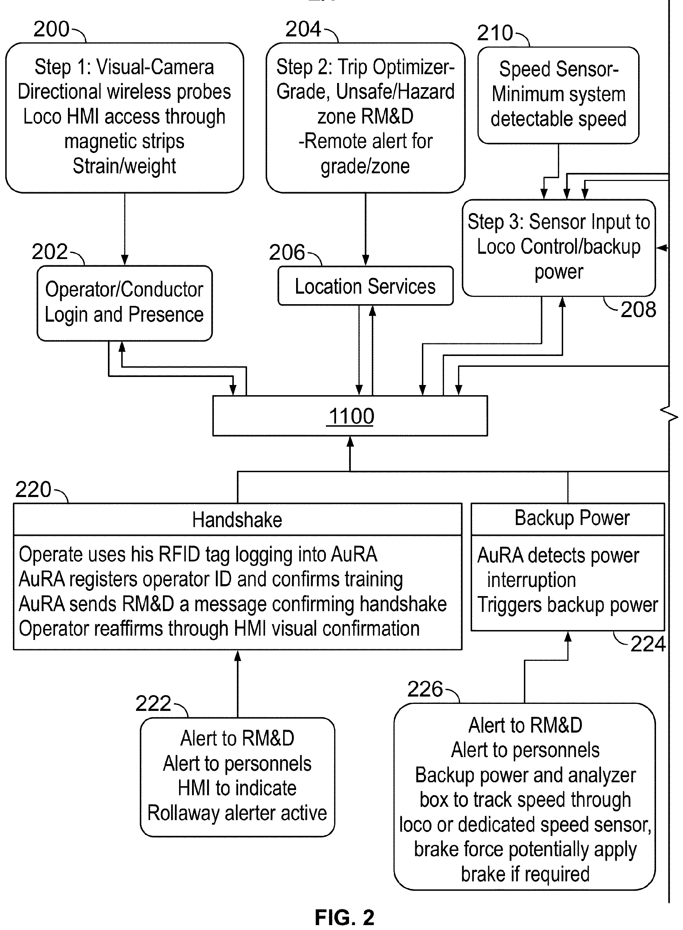

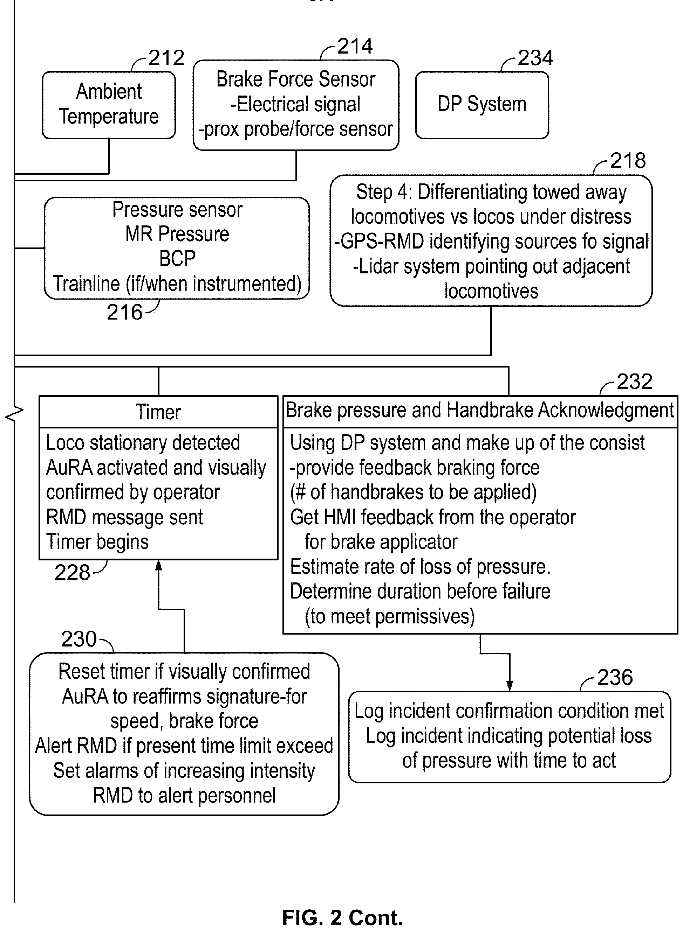

Figure 2 illustrates operation of the system shown in Figure 1. The system may be utilized to prevent vehicle roll away or other unsafe condition by first confirming the presence of a vehicle operator using a combination of devices as described herein. The system may also be capable of determining and alerting the vehicle operator of conditions that may make it safe or unsafe to move within or exit the vehicle. In one example, the system may provide an alert to an off-board operator or controller that the conditions of the vehicle may make it safe or unsafe for the operator to move within or exit the vehicle. In another example, the system may provide an alert to an operator of a second vehicle that the conditions of a different, first vehicle may make it safe or unsafe for the operator to exit the first vehicle. The alert may provide instructions to second vehicle to avoid the first vehicle or the alert may prevent the second vehicle from approaching the first vehicle if the first vehicle is not in a safe state. In the specific example of a locomotive, the system may be adapted to determine whether an operator may safely and lawfully enter, move within, or exit the locomotive. Moreover, the system may be adapted to alert the operator, a supervisor, or other party of such conditions which may include the speed of the vehicle, the orientation of the vehicle, brake pressure, or the motion of other vehicles in the vicinity.

The control device of the system can make several decisions based on sensor output, with these decisions collectively used to determine whether the operator can safely leave a vehicle unattended while preventing roll away of the vehicle. The control device can receive output from the operational sensors and/or environmental sensors to make these decisions. For example, the control device can determine whether the operator may be present and onboard the vehicle. Presence data 200 output by the sensors can be examined to make an operator presence decision 202 (whether the operator may be onboard the vehicle or may not be onboard the vehicle). The presence data can include data output by one or more cameras, wireless probes, card scanners, or strain/weight sensors. The camera can output images or video of the operator onboard the vehicle or to show that the operator may not be onboard the vehicle. The wireless probes can be directional probes that may determine the presence or absence of the operator based on the reflection (or lack thereof) of wireless signals. The card scanner can output data indicating when someone inserts or slides an identification card to demonstrate that the operator may be onboard or left the vehicle. The strain/weight sensors can detect the weight of an operator sitting in a chair or on a location onboard the vehicle (whereas the absence of the operator may be detected by a lack of this weight). The presence data can be examined by the control device to decide whether the operator may be onboard the vehicle.

Location data 204 output by the operational and/or environmental sensors can be examined to make a location decision 206. The location data can be output by one or more onboard software applications of the vehicle, such as a trip planning system that may use information such as route grades, locations, and the like, to dictate throttle and/or brake settings for the vehicle to complete a trip in a fuel efficient manner. The location data can indicate the grade on which the vehicle may be currently located, whether there may be nearby homes or buildings (or if the vehicle may be in a remote location), whether the vehicle may be in a location or area where certain hazardous cargo cannot remain, etc. The control device can examine this information and decide whether the location of the vehicle may be safe or unsafe for being left unattended. For example, if the vehicle may be located on a grade (or a grade that may be steeper than a designated grade), if the vehicle may be transporting hazardous cargo and may be in an area where such cargo may not be permitted to remain, if the vehicle may be in an urban or populated area, etc., then the control device may decide that the vehicle cannot remain in this location or area while unattended (without an operator onboard).

One or more additional sensor inputs 208 may be provided to the control device to determine whether the vehicle may be in a state or condition where the vehicle can safely be left unattended (or left without an adequately trained operator onboard the vehicle while one or more other persons that are not trained to operate the vehicle remain onboard). These additional sensor inputs can include a moving speed 210 of the vehicle. This moving speed may be measured and output by (or may be calculated based on the output from) one or more sensors such as a GNSS receiver, a tachometer, or the like. The control device can decide that the vehicle may not be in a condition or state for the operator to leave the vehicle responsive to the sensed speed being faster than a threshold speed (e.g., faster than 0.1 miles per hour or another limit). This threshold speed may be zero speed (e.g., that is, if any moving speed is measured, then the vehicle is not stationary and is not in a state or condition to be left by the operator(s)).

Another additional sensor input can include an ambient temperature 212 of the interior and/or exterior of the vehicle. This temperature may be measured and output by (or may be calculated based on the output from) one or more sensors such as a thermometer, thermocouples, or the like. The control device can decide that the vehicle may not be in a condition or state for the operator to leave the vehicle based on the measured temperature. For example, at lower temperatures, there may be an increased risk that the pressure (e.g., air pressure) inside a brake system (e.g., an air brake system) of the vehicle may be too low to safely leave the vehicle unattended. Therefore, in one example, the control device may decide that the vehicle may not be left unattended responsive to the measured temperature being below a threshold temperature.

Another example of an additional sensor input can include a brake force measurement 214, 216. The brake force may be measured and output by (or may be calculated based on the output from) one or more sensors such as a force sensor, a proximity sensor, pressure sensor, or the like. These sensors may measure the force imparted by a brake of the vehicle, such as by directly measuring the force, measuring movement of a brake (e.g., toward a wheel or other surface), measuring pressure in the brake system, or the like. The control device can decide that the vehicle may not be in a condition or state for the operator to leave the vehicle based on the measured brake force. For example, if the brake force may be measured to be less than a threshold force, then the brake system or brakes of the vehicle may not be providing sufficient braking force or effort to prevent movement of the vehicle. The threshold force can vary or be re-calculated based on other factors or sensor inputs. For example, the threshold force may be increased by the control device for heavier vehicles, for increased grades (uphill or downhill slopes) of the route or surface on which the vehicle is disposed, etc., but may be decreased for lighter vehicles, for decreased or no grades (e.g., a flat surface), or the like.

If movement of the vehicle may be detected by the control device (e.g., based on the moving speed sensor input), the control device may examine one or more of the sensor outputs to make a towing/pushing decision 218. This decision can involve determining whether the movement may be acceptable or unacceptable due to the presence of another vehicle causing the movement. Acceptable movement may occur for an unattended vehicle if the vehicle is being pushed or pulled (e.g., towed) by another vehicle. The control device can examine signals received from off-board the vehicle to determine whether the vehicle is being pushed or pulled by another vehicle. These other signals can include notification signals received from another vehicle informing the control device of the towing or pushing, location signals received from another vehicle that indicate the movement or locations of the other vehicle (e.g., GNSS or GPS signals), signals received from a proximity sensor (a LiDAR system or sensor) indicating the presence of the other vehicle, or the like. If the control device both detects movement of the first vehicle and that another second vehicle may be towing or pushing the first vehicle, the control device may determine that the movement of the first vehicle may be acceptable. Otherwise, the control device may generate one or more warnings, alarms, or notifications that the movement of the first vehicle may be unacceptable.

The control device may perform a handshake operation 220 that may be used to determine or assist in the determination of whether there may be an operator onboard the vehicle and that operator may be sufficiently trained to control components of the vehicle to allow the vehicle to be left unattended. This handshake operation can involve the control device determining whether any presence signals have been received that indicate the operator is onboard and/or that identify the operator. The signals may be interpreted by a machine learning system or AI to determine the presences of the operator onboard and/or identify the operator. These signals may be provided by one or more optical sensors, proximity sensors, the logging system, directional wireless sensors, strain gages, load cells, etc. As another example, the control system can receive a presence signal from an operator input device, such as an RFID reader. The control device can examine this presence signal to identify the operator. In one example, the control device may access a memory that lists different levels of training and/or experience associated with different operators. The control device can compare the identification of the operator with the training levels stored in the memory to determine the level of training of the identified operator and whether this level may be at least a threshold level. The threshold level of training can be established as a minimum amount of training and/or experience to demonstrate that the operator knows how to safely prepare the vehicle to remain stationary before departing the vehicle. The control device can send a signal 222 to an off-board location to notify others of the presence, identity, and/or training of the operator, or to otherwise indicate that an adequately trained operator is onboard the vehicle (to prepare the vehicle to be left unattended). The control device optionally can receive confirmation of the identity and/or training of the operator from the operator (e.g., via an input device, such as a touchscreen, keyboard, microphone, or the like).

The control device can perform a backup power operation 224 responsive to detecting a loss of electric power to one or more components of the vehicle. This operation can involve the control device detecting a power interruption. This interruption can be detected by using one or more sensors (e.g., volt meters, ammeters, or the like) that measure the voltage or current conducted to one or more components of the vehicle. The control device can implement one or more responsive actions 226 in response to detecting the interruption of power. These responsive actions can include activating a backup power source to power at least some of the components onboard the vehicle, sending an alert or warning to one or more off-board locations, communicating with one or more of the sensors to determine whether movement of the vehicle is detected and/or the brake force has decreased due to or after the power interruption occurs, and/or automatically engaging one or more brakes of the vehicle.

The control device optionally can repeatedly check the sensor outputs on a timed basis using a timing operation 228. This operation can involve the control device initiating a countdown of time once the control device determines that the vehicle may be stationary, that the operator has indicated to the control device that the operator may be leaving the vehicle, and that the sensor outputs to the control device indicate that the vehicle may be in an acceptable state or condition for the operator to leave the vehicle. The timer or timing operation can be restarted by the control device responsive to the sensor outputs indicating that the vehicle may be still in an acceptable state or condition for remaining unoccupied by the operator. Optionally, the timer can be reset by the operator visually confirming that the vehicle may be in a safe or acceptable state and providing input indicating the same to the control device.

But, if one or more of these sensor outputs indicate that the state or condition of the vehicle may be unacceptable or unsafe to be left unattended at or prior to expiration of the timer, then the control device may generate and send an alarm or warning 230 to an off-board location. This alarm or warning can notify the operator, another operator, or another person or system of the unsafe condition of the vehicle and potentially for the need for the operator, another operator, or another person to return to the vehicle. For example, if the brake force measured by the sensor(s), movement of the vehicle is measured by the sensor(s), or the like, then the control device may generate the alarm or warning.

The control device can perform a brake confirmation operation 232 that may involve the control device confirming that one or more brakes of the vehicle may be engaged to a degree or amount to ensure that the vehicle will not move once the operator leaves the vehicle. For example, the control device can communicate with a vehicle control system 234 of the vehicle that controls how brake settings and/or throttle settings are controlled. This control system can be a distributed power system or other type of system that can control the brakes and/or throttle of the vehicle (and/or other vehicles in the same multi-vehicle system). The control device can obtain information from the control system that may indicate the level or amount of braking force needed to prevent movement of the vehicle or vehicle system. This information can include a number of vehicles in the vehicle system, a weight of the vehicle system, or the like. Based on this information, the control device can determine the threshold force for the vehicle (as described above). The control device can measure the brake force applied by the brake(s) of the vehicle and/or vehicle system (e.g., via sensor output) to determine if sufficient brake force is being provided. Optionally, the control device can instruct the operator how to engage the brakes (e.g., what setting the brakes should be set) and/or how many brakes to engage (e.g., handbrakes or other brakes) to ensure that at least the threshold force is being provided by the brake(s) of the vehicle or vehicle system. In one example, if the vehicle may not be in an acceptable state or condition for the operator to leave the vehicle, the control device may take one or more responsive action, for example engaging the braking system, locking a door of the vehicle to prevent the operator leaving the vehicle, sending a notification, or the like.

The control system can receive input from the operator indicating that the brakes may be engaged to provide at least the threshold force of braking. Optionally, the control system can obtain or calculate a leak rate of the brake or brake system (e.g., from the sensors), which indicates the rate at which air or another fluid used for braking may be leaking from the brake system. The control system can determine whether this rate may be faster than a threshold rate (in which case the vehicle is not in a state or condition for being left unattended) or no faster than this threshold rate (in which case the vehicle may be in the state or condition for being left unattended). The control system can indicate whether the operator can safely leave the vehicle and/or can adjust the duration of the timer described above based on the leak rate. For example, the control system may set the duration of the timer to be shorter than the time needed for the leak rate to cause the pressure in the brake or brake system to become low enough that the brake or brake system can no longer provide at least the threshold force to brake the vehicle or vehicle system.

In one embodiment, once the operator may initiate the request to leave with the controller of the safety system, the controller can initiate the timer to provide for an opportunity for the operator to confirm that sufficient brakes have been applied. For example, the controller can start a countdown from a designated time (e.g., one minute, thirty seconds, etc.). The operator may be required to provide input to the controller before expiration of the timer or countdown. This input can indicate that a sufficient number of handbrakes are engaged or that other brakes are engaged to prevent movement of the vehicle or vehicle system. If no such confirmation input may be received by the controller, the controller can generate an alarm (e.g., a visual alarm) and/or send an alert message to an off-board system or location, such as a remote monitoring and diagnostics system. If the input may be provided and the input may be confirmed by the sensor data, the controller of the safety system can check outputs from the sensors to ensure the operational state of the vehicle or vehicle system (e.g., the brakes) has not changed (e.g., accidentally, inadvertently, or otherwise) before engaging the rollaway protection described herein.

The control device can implement one or more brake notification operations 236 based on the brake confirmation operation. These notification operation(s) can include recording (e.g., logging) and/or sending an alert or notification that indicates the brake(s) are engaged and providing at least the threshold force for at least a threshold period of time (and that the vehicle may be in the state or condition that permits the operator to safely leave the vehicle unattended). Optionally, the notification operation can include recording and/or sending an alert or notification that indicates the brake(s) are not engaged or are not providing at least the threshold force for at least a threshold period of time (and that the vehicle may not be in the state or condition that permits the operator to safely leave the vehicle unattended).

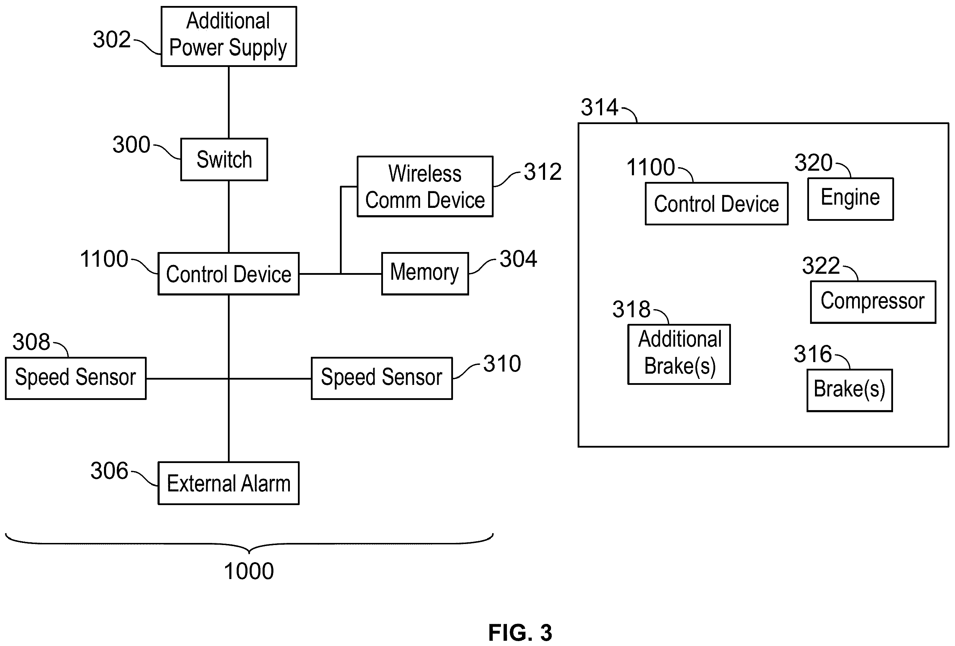

Figure 3 illustrates one example of a stand-alone embodiment of the safety system. As described above, the safety system may be integrated with a control system or controller of the vehicle, and be powered by the same power source. Alternatively, the safety system may be a stand-alone system or a system capable of being independently powered apart from the controller or control system of the vehicle. For example, the safety system may be powered by the primary power source that also powers the vehicle controller or vehicle control system. But in response to an interruption or disruption in the supply of power from this primary power source, the stand-alone safety system can switch to being powered by one or more other power sources to ensure that the safety system remains powered while the vehicle or vehicle system is left unattended. Figure 3 illustrates one example of such a stand-alone safety system.

The vehicle in which the vehicle safety system may be disposed and/or operates can be powered by one or more primary power sources, such as an alternator or generator, battery cells, fuel cells, or the like. A power interruption can occur when the primary power source(s) no longer supplies electric current to one or more components of the vehicle or vehicle system (e.g., the control device, one or more sensors, etc.).

In response to a power interruption being detected, a switch 300 can automatically close to conductively couple one or more additional power supplies 302 of the stand-alone safety system with the control device and other components of the vehicle or safety system. The additional power supply or supplies can include one or more ultracapacitors, auxiliary power units, battery packs, fuel cells, or the like. These additional power supplies can deliver electric current to the safety system to ensure that the standalone safety system can continue operating to ensure that the vehicle is in a safe state or condition with the operator no longer onboard and/or to warn others if the vehicle is no longer in the safe state or condition once the operator leaves the vehicle.

The control device can be powered by the additional power supply and can log (e.g., record) the failure of the primary power supply and/or the activation of the additional power supply or supplied. This information can be logged or recorded in a memory 304, such as a tangible and non-transitory computer memory. The control device optionally can also activate an alarm 306 or other output device onboard the vehicle to warn any persons onboard the vehicle or near the vehicle or the loss of power from the primary power supply or supplies. This alarm can be an external alarm that may be seen and/or heard by persons off-board or otherwise outside of the vehicle, and may be a separate, independently controllable alarm aside from an onboard alarm already present in the vehicle.

The additional power supply or supplies also can power additional components of the safety system, such as speed sensors (e.g., a primary speed sensor 308 and a backup or standalone speed sensor 310) and/or a wireless communication device 312. The communication device can represent transceiving circuitry, such as one or more antennas, modems, radios, cellular transceivers, etc., that allow the control device to wirelessly communicate with one or more other devices and/or systems. This can ensure that the speed sensor(s) continue monitoring the vehicle to determine whether the vehicle starts moving while no operator may be onboard, the alarm can be activated (to warn others of the now moving vehicle), and/or the communication device can continue to communicate signals (e.g., alarms or warnings) to notify others of the moving vehicle that should be stationary.

For example, the control device of the monitored vehicle can communicate with a control device 1100 of another vehicle 314 using the communication device. The other vehicle may have a similar or identical communication device that can communicate with the communication device of the monitored vehicle. This other vehicle may be separate from the vehicle on which the control device is disposed or that is coupled with the vehicle on which the control device is disposed (e.g., mechanically coupled with each other directly or indirectly, such as by one or more other vehicles, in a multi-vehicle system). Responsive to detecting movement of the vehicle or another change in the state of this vehicle where the vehicle is no longer safe to be unoccupied (the vehicle in which the control device is disposed, referred to as the monitored vehicle), the control device of the monitored vehicle can use the communication device to send a signal to the other vehicle. This signal can be an alarm, warning, notification, etc.

Responsive to receiving this signal, a control device of the other vehicle can implement one or more responsive actions. As one example, the control device of the other vehicle can control one or more brakes 316 (e.g., air brakes, friction brakes, etc.) and/or 318 (e.g., handbrakes) to engage the brakes. As another example, the control device of the other vehicle can activate an engine 320 (if the engine is deactivated), which can power one or more other devices, such as a compressor 322 of a brake system of the other vehicle. This compressor can increase the pressure of the brake system of the other vehicle, which can provide or increase the braking force that may be provided by the brake system of the other vehicle. In one example, the responsive actions may include locking a door of the vehicle to prevent the operator from leaving the vehicle. One or more of these actions can help prevent or slow movement of the monitored vehicle in situations where the vehicles may be coupled with each other and/or the other vehicle may be down a grade from the monitored vehicle (e.g., such that the monitored vehicle may slightly roll toward and contact the other vehicle which stops movement of the monitored vehicle due to engagement of the brake(s)).

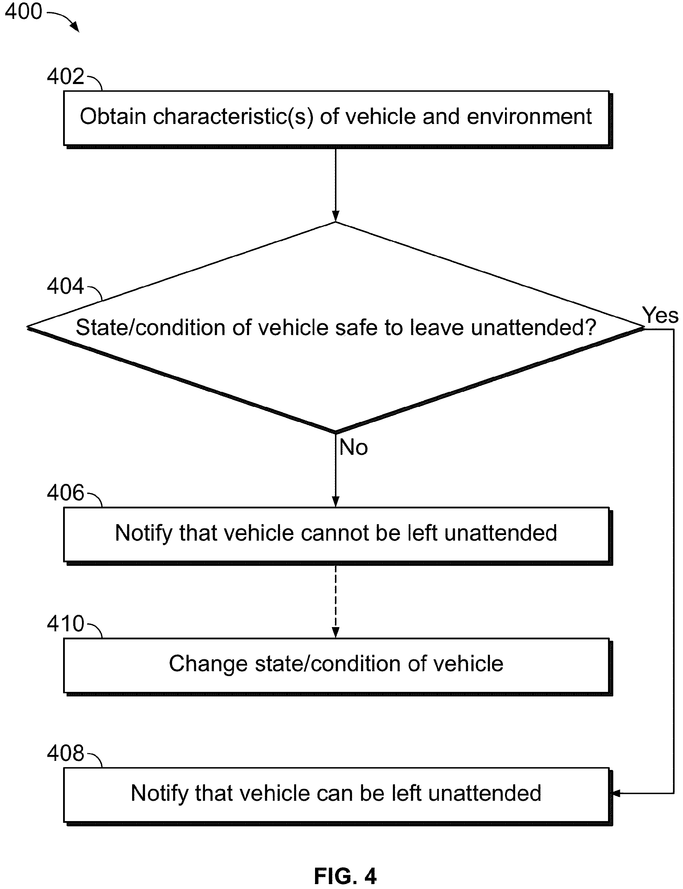

Figure 4 illustrates a flowchart of one example of a method 400 for determining whether a state of a vehicle may be appropriate for the vehicle to be left unattended. The method can represent at least some operations performed by the safety system described herein. At step 402, characteristics of the vehicle and/or the environment of the vehicle may be obtained. These characteristics can be obtained or determined from sensor output. The characteristics can include the presence (or absence) of an operator onboard the vehicle, the training and/or expertise of the operator, the location of the vehicle, the presence or absence of any prohibited locations where the vehicle cannot be left unattended (e.g., due to a grade in the route and/or proximity to a populated location), the moving speed of the vehicle (if any), the ambient temperature, the force applied by brake(s) of the vehicle, and the like.

At step 404, a decision may be made as to whether the vehicle can be left unattended based on one or more of the characteristics that may be obtained. For example, the control device can examine output from a sensor to identify the operator onboard the vehicle and optionally determine whether this operator has sufficient training and/or expertise to be able to set the vehicle in a state or condition to be left unattended. If the operator may not be onboard or may not have sufficient training or expertise, then the vehicle may not be in a state or condition to be left unattended and flow of the method can proceed toward step 406. But if the operator is onboard and has sufficient training or expertise, then the vehicle may be in a state or condition to be left unattended (or the operator has the ability to place the vehicle in this state or condition) and flow of the method can proceed toward step 408.

As another example, the control device can examine the location of the vehicle to determine whether the vehicle may be in an area or zone where the vehicle cannot be safely left unattended. If the control device determines that the vehicle may be on a grade, may be in or near a populated location, or may be in another location where the vehicle cannot be left unattended, then the vehicle may not be able to be left unattended and flow of the method can proceed toward step 406. Otherwise, flow of the method can proceed toward step 408.

The control device can examine the moving speed (if any) of the vehicle to determine whether the vehicle may be moving or stationary. If the control device determines that the vehicle may be moving (even slowly), then the vehicle may not be able to be left unattended and flow of the method can proceed toward step 406. Otherwise, if the control device determines that the vehicle is stationary, then the vehicle may be able to be left unattended and flow of the method can proceed toward step 408.

The control device can examine the ambient temperature to determine whether the temperature may be too low to safely leave the vehicle. If the control device determines that the temperature is too low, then the brakes or brake system of the vehicle may not be able to provide sufficient braking force to prevent movement of the vehicle. As a result, flow of the method can proceed toward step 406. Otherwise, if the control device determines that the temperature may not be too low, then the vehicle may be able to be left unattended and flow of the method can proceed toward step 408.

The control device can examine the braking force applied by the brake(s) of the vehicle to determine whether the brake force may be sufficient to prevent movement of the vehicle (e.g., based on the weight of the vehicle or vehicle system, composition of the vehicle system, grade of the route, etc.) to safely leave the vehicle. If the control device determines that the brake force is too low, then the brakes or brake system of the vehicle may not be able to provide sufficient braking force to prevent movement of the vehicle. As a result, flow of the method can proceed toward step 406. Otherwise, if the control device determines that the brake force is not too low, then the vehicle may be able to be left unattended and flow of the method can proceed toward step 408.

At step 406, one or more notifications may be generated to inform that the vehicle may not be left unattended. For example, the control device may activate one or more alarms onboard or off-board the vehicle and/or send one or more signals to off-board locations to inform the operator and/or others that the vehicle cannot be left unattended in the current state or condition of the vehicle. Optionally, the method also may include (at step 410) changing the state or condition of the vehicle. For example, the control device may control the brakes or direct the operator to control the brakes to apply more braking force. As another example, the control device may direct another vehicle to apply more braking force to help prevent movement of the monitored vehicle. As another example, the control device may lock a door of the vehicle to prevent the operator from leaving the vehicle if the vehicle is not in a safe state. Flow of the method can return to one or more prior operations (e.g., step 402) to determine whether the changed state or condition of the vehicle allows for the vehicle to be left unattended. Optionally, the method can terminate

At step 408, a notification may be generated to inform the operator and/or one or more off-board locations that the vehicle may be in a state or condition where the vehicle can safely be left unattended. The method can return to one or more prior operations (e.g., step 402) to continue monitoring the state or condition of the vehicle to ensure that the vehicle remains in the state or condition while left unattended. The control device may use a timer to repeatedly check on the state or condition of the vehicle, as described above.

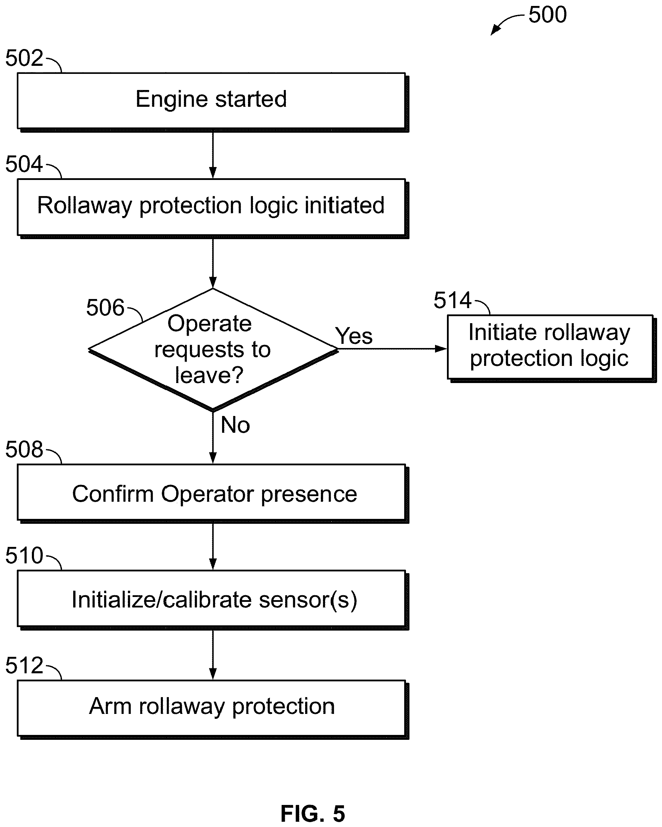

With continued reference to operation of the system shown in Figure 2, Figure 5 illustrates a flowchart of one example of a method 500 for determining the presence of the operator onboard the vehicle in connection with preventing rollaway of the vehicle once the operator leaves the vehicle. All or part of the method represented by the flowchart shown in Figure 5 can be used to determine whether an operator may be onboard the vehicle and optionally to identify the operator before allowing the operator to leave the vehicle unattended. At step 502, the method may include determining that the engine is started. At step 504, the method may include the rollaway protection logic being initiated. The rollaway protection logic may include a system that may evaluate allowable conditions for a stationary vehicle to initiate the rollaway protection system. This may include evaluating whether the operator has sufficient training and/or expertise to initiate the rollaway protection. The rollaway protection may include fulling applying independent brakes on the vehicle, removing a reverser on a locomotive or removing keys on a vehicle, applying an automatic brake (where required), confirming the gauges on the automatic brake do not indicate a possible releasee of the air brakes, confirming the automatic brake handle remains in a service position, or the like.

At step 506, the method may include determining whether the operator requests to leave the operator position. The operator may request to leave the operator position for a break or to change operators, such as at a shift change. If the operator has not requested to leave, the method continues to step 508.

At step 508, the method may include confirming the operator's presence in the operating position. The operator's presence may be confirmed by a control system that evaluates the inputs of one or more sensors. The sensors may include a load cell sensor or a strain gage sensor on the operator's seat or portion of a floor of the vehicle where the operator stands, etc. to detect the presence of the operator in an operating position. The sensors may include a camera or infrared sensor positioned in view of the operator while the operator is in the operator position. The operator position may generally be understood to be the general area where the operator is positioned while operating the vehicle. In one example, the sensors may include a proximity sensor or RFID reader positioned to detect the movement or presence of the operator in the operator position. The sensors may include identification of the operator in the operator position through the PTC login information. Where the operator logs in to the PTC system, the operator may be assumed to be in the operator position.

As discussed above, the outputs of the various sensors may vary during a given trip based on various factors, such as the speed of the vehicle, the grade of the route, the age or condition of the route, the size of the operator, among other factors. Thus, at step 510, the method may include initializing or calibrating the one or more sensors. The calibration may help to correct for noise and other variations in the signal output. In one example, the calibration may be done using machine learning or AI. By calibrating using the outputs from multiple sensors, the method may produce a more accurate determination of the operator's presence in the operator position.

At step 512, the method may include engaging the arm rollaway protection. Where the outputs may indicate that the vehicle may be stationary, the method may confirm that the armed rollaway protection is effective. Where the outputs may indicate that the vehicle may be moving, the method may include the handshake with the alerter, as discussed above.

If at step 506 the operator requests to leave, the method may proceed to step 514. At step 514, the method may include initiating rollaway protection logic. Where it may be determined that the conditions indicate it may be safe for the operator to leave, the method may include arming the rollaway protection and granting the operator's request to leave.

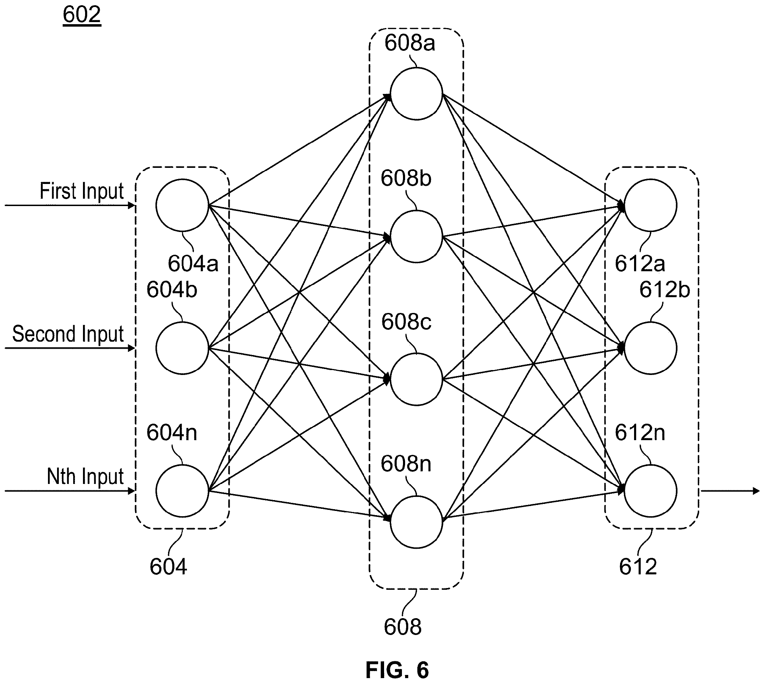

As previously stated, one or more of the vehicle safety systems described herein may be implemented in an AI or machine-learning system. Figure 6 illustrates a functional block diagram of an example neural network 602 that can be used by or included in the vehicle safety system. The vehicle safety system may review various inputs, described above, for example the operational sensors, the environmental sensors, or the like. In an example, the neural network can represent a long short-term memory (LSTM) neural network. In an example, the neural network can represent one or more recurrent neural networks (RNN). The neural network may be used to implement the machine learning as described herein, and various implementations may use other types of machine learning networks. The neural network may include an input layer 604, one or more intermediate or hidden layers 608, and an output layer 612. Each layer includes artificial individual units, or neurons. Each neuron can receive information (e.g., as input into the neural network or as received as output from another neuron in another layer or the same layer), process this information to generate output, and provide the output to another neuron or as output of the neural network. The input layer may include several input neurons 604a, 604b ... 604n. The hidden layer may include several intermediate neurons 608a, 608b... 608n. The output layer may include several output neurons outputs 612a, 612b... 612n. The inputs may include, for example, location data, speed data, engine data, pilot position data, temperature, humidity, pressure, or the like.

Each neuron can receive an input from another neuron and output a value to the corresponding output to another neuron (e.g., in the output layer or another layer). For example, the intermediate neuron 608a can receive an input from the input neuron 604a and output a value to the output neuron 612a. Each neuron may receive an output of a previous neuron as an input. For example, the intermediate neuron 608b may receive input from the input neuron 604b and the output neuron 612a. The outputs of the neurons may be fed forward to another neuron in the same or different intermediate layer.

The processing performed by the neurons may vary based on the neuron, but can include the application of the various rules or criteria described herein to partially or entirely decide one or more aspects of the vehicle safety system, for example when the vehicle may be in a safe state, when a responsive action may be required in response to determining that the vehicle is no longer in a safe state subsequent to the operator leaving the vehicle, or the like. The output of the application of the rule or criteria can be passed to another neuron as input to that neuron. One or more neurons in the intermediate and/or output layers can determine matches between one or more aspects of the vehicle safety system, for example that the vehicle may be in a safe state for the operator to leave the vehicle. As used herein, a "match" may refer to a preferred operation of the vehicle safety system based on the inputs, for example when the vehicle is in a safe state. The preferred operation may be based on increasing performance, efficiency, safety, longevity, or a combination of any or all these factors. The last output neuron 612n in the output layer may output a match or no-match decision. For example, the output from the neural network may be that a responsive action needs to be implemented based on the vehicle not being in a safe state. Although the input layer, the intermediate layer(s), and the output layer may be depicted as each including three artificial neurons, one or more of these layers may contain more or fewer artificial neurons. The neurons can include or apply one or more adjustable parameters, weights, rules, criteria, or the like, as described herein, to perform the processing by that neuron.

In various implementations, the layers of the neural network may include the same number of artificial neurons as each of the other layers of the neural network. For example, the operational sensors values, the environmental sensors values, or the like may be processed to provide information to the input neurons 604a-604n. The output of the neural network may represent a match or no-match of the inputs to the a given output. More specifically, the inputs can include historical vehicle safety data. The historical vehicle safety data can be provided to the neurons 608a-608n for analysis and matches between the historical vehicle safety data. The neurons 608a-608n, upon finding matches, may provide the potential matches as outputs to the output layer, which can determine a match, no match, or a probability of a match.

In some embodiments, the neural network may be a convolutional neural network. The convolutional neural network can include an input layer, one or more hidden or intermediate layers, and an output layer. In a convolutional neural network, however, the output layer may include one fewer output neuron than the number of neurons in the intermediate layer(s), and each neuron may be connected to each output neuron. Additionally, each input neuron in the input layer may be connected to each neuron in the hidden or intermediate layer(s).

Such a neural network-based vehicle control system can be trained by operators, automatically self-trained by the vehicle safety system itself, or can be trained both by operators and by the vehicle safety system itself to improve how the system operates.

In one embodiment, the control system may have a local data collection system deployed that may use machine learning to enable derivation-based learning outcomes. The control device may learn from and make decisions on a set of data (including data provided by the various sensors), by making data-driven predictions and adapting according to the set of data. In embodiments, machine learning may involve performing a plurality of machine learning tasks by machine learning systems, such as supervised learning, unsupervised learning, and reinforcement learning. Supervised learning may include presenting a set of example inputs and desired outputs to the machine learning systems. Unsupervised learning may include the learning algorithm structuring its input by methods such as pattern detection and/or feature learning. Reinforcement learning may include the machine learning systems performing in a dynamic environment and then providing feedback about correct and incorrect decisions. In examples, machine learning may include a plurality of other tasks based on an output of the machine learning system. In examples, the tasks may be machine learning problems such as classification, regression, clustering, density estimation, dimensionality reduction, anomaly detection, and the like. In examples, machine learning may include a plurality of mathematical and statistical techniques. In examples, the many types of machine learning algorithms may include decision tree based learning, association rule learning, deep learning, artificial neural networks, genetic learning algorithms, inductive logic programming, support vector machines (SVMs), Bayesian network, reinforcement learning, representation learning, rule-based machine learning, sparse dictionary learning, similarity and metric learning, learning classifier systems (LCS), logistic regression, random forest, K-Means, gradient boost, K-nearest neighbors (KNN), a priori algorithms, and the like. In embodiments, certain machine learning algorithms may be used (e.g., for solving both constrained and unconstrained optimization problems that may be based on natural selection). In an example, the algorithm may be used to address problems of mixed integer programming, where some components restricted to being integer-valued. Algorithms and machine learning techniques and systems may be used in computational intelligence systems, computer vision, Natural Language Processing (NLP), recommender systems, reinforcement learning, building graphical models, and the like. In an example, machine learning may be used for vehicle performance and behavior analytics, and the like.

In one embodiment, the control system may include a policy engine that may apply one or more policies. These policies may be based at least in part on characteristics of a given item of equipment or environment. With respect to control policies, a neural network can receive input of a number of environmental and task-related parameters. These parameters may include an identification of a determined trip plan for a vehicle group, data from various sensors, and location and/or position data. The neural network can be trained to generate an output based on these inputs, with the output representing an action or sequence of actions that the vehicle group should take to accomplish the trip plan. During operation of one embodiment, a determination can occur by processing the inputs through the parameters of the neural network to generate a value at the output node designating that action as the desired action. This action may translate into a signal that causes the vehicle to operate. This may be accomplished via backpropagation, feed forward processes, closed loop feedback, or open loop feedback. Alternatively, rather than using backpropagation, the machine learning system of the controller may use evolution strategies techniques to tune various parameters of the artificial neural network. The controller may use neural network architectures with functions that may not always be solvable using backpropagation, for example functions that are non-convex. In one embodiment, the neural network has a set of parameters representing weights of its node connections. A number of copies of this network are generated and then different adjustments to the parameters are made, and simulations are done. Once the output from the various models are obtained, they may be evaluated on their performance using a determined success metric. The best model is selected, and the vehicle controller executes that plan to achieve the desired input data to mirror the predicted best outcome scenario. Additionally, the success metric may be a combination of the optimized outcomes, which may be weighed relative to each other.

While this invention has been described with respect to at least one embodiment, the present invention can be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains and which fall within the limits of the appended claims.

As used herein, an element or step recited in the singular and proceeded with the word "a" or "an" do not exclude the plural of said elements or operations, unless such exclusion is explicitly stated. Furthermore, references to "one embodiment" of the invention do not exclude the existence of additional embodiments that incorporate the recited features. Moreover, unless explicitly stated to the contrary, embodiments "comprising," "comprises," "including," "includes," "having," or "has" an element or a plurality of elements having a particular property may include additional such elements not having that property. In the appended claims, the terms "including" and "in which" are used as the plain-English equivalents of the respective terms "comprising" and "wherein." Moreover, in the following clauses, the terms "first," "second," and "third," etc. are used merely as labels, and do not impose numerical requirements on their objects. Further, the limitations of the following claims are not written in means-plus-function format and are not intended to be interpreted based on 35 U.S.C. § 112(f), unless and until such claim limitations expressly use the phrase "means for" followed by a statement of function devoid of further structure.

In one embodiment, a vehicle safety system is provided that may include operational sensors, environmental sensors and one or more processors. The operational sensors may sense one or more operational characteristics of a vehicle and output operational data based on the one or more operational characteristics that are sensed. The environmental sensors may sense one or more environmental characteristics of an environment external to the vehicle and may output environmental data based on the one or more environmental characteristics that are sensed. The one or more processors may examine the operational data and the environmental data to determine whether the vehicle may be in a safe state for an onboard operator of the vehicle to exit the vehicle while avoiding the vehicle rolling away from a stationary state. The one or more processors may examine the operational data and the environmental data to determine whether the vehicle may not be in the safe state and may generate one or more notifications to the onboard operator in response to determining that the vehicle may not be in the safe state.

In one example, the operational sensors may provide the operational data to the one or more processors and the environmental sensors may provide the environmental data to the one or more processors after the operator leaves the vehicle. The one or more processors may continue examining the operational data and the environmental data subsequent to the operator leaving the vehicle to determine whether the vehicle may no longer be in the safe state. The one or more processors may implement one or more responsive actions in response to determining that the vehicle may no longer be in the safe state subsequent to the operator leaving the vehicle. The responsive actions may include changing a brake setting of the vehicle.

In one example, the operational sensors may include one or more of a location sensor configured to output location information indicative of a location of the vehicle, an orientation sensor configured to output orientation information indicative of an orientation of the vehicle, or a pilot sensor configured to output presence information indicative of a presence or absence of the operator onboard the vehicle.

In one embodiment, a method is provided that may include sensing operational conditions using one or more operational sensors. The operational conditions may be indicative of operation of a vehicle system. The method may include sensing environmental conditions using one or more environmental sensors. The environmental conditions may be indicative of an ambient environment around the vehicle system. The method may include examining the operational conditions and the environmental conditions to determine whether the vehicle system is in a safe state for an onboard operator of the vehicle system to exit the vehicle system while avoiding the vehicle system rolling away from a stationary state. The method may include generating one or more notifications to the operator in response to determining that the vehicle system is not in the safe state.

In one example, the operational conditions and the environmental conditions may continue to be sensed subsequent to the operator leaving the vehicle system.

In one example, the method may further include implementing one or more responsive actions in response to determining that the vehicle system is no longer in the safe state subsequent to the operator leaving the vehicle system based on the operational conditions and the environmental conditions that are sensed subsequent to the operator leaving the vehicle system. Implementing the one or more responsive actions may include one or more of changing a brake setting of the vehicle system, generating one or more notifications to an off-board system, or locking a door of the vehicle system.

In one example, sensing the operational conditions may be performed by may one or more of a location sensor configured to output location information indicative of a location of the vehicle, an orientation sensor configured to output orientation information indicative of an orientation of the vehicle, or a pilot sensor configured to output presence information indicative of a presence or absence of the operator onboard the vehicle. Sensing the environmental conditions may be performed by one or more of a temperature sensor, a pressure sensor, a humidity sensor, or a precipitation sensor.

In one embodiment, a vehicle safety system is provided that may include a sensing system that may sense and output first data indicative of a presence or absence of an operator onboard a vehicle. The vehicle safety system may include one or more operational conditions indicative of operation of the vehicle and one or more environmental conditions indicative of an ambient environment outside the vehicle. The vehicle safety system may include a logging system that may determine and output second data indicative of whether the operator has sufficient training to control a braking system of the vehicle responsive to the sensing system detecting the presence of the operator onboard the vehicle. The vehicle safety system may include a controller that may examine the first data and the second data to determine whether the operator is authorized and qualified to control the braking system of the vehicle to prevent an unauthorized rollaway of the vehicle following departure of the operator from the vehicle. The controller may generate one or more notifications indicative of a safe state of the vehicle for the operator to leave the vehicle following engagement of the braking system based on the one or more operational conditions, the one or more environmental conditions, and the training of the operator.

In one example, the controller may generate the one or more notifications onboard the vehicle to notify the operator whether the operator can safely leave the vehicle. The controller may generate the one or more notifications onboard the vehicle as an alarm to notify the operator that the operator cannot leave the vehicle in a current state of the vehicle. The controller may determine a braking force needed to prevent the unauthorized rollaway and may determine whether the braking system has been controlled by the operator to provide at least the braking force that is needed.

In one example, the controller may generate the one or more notifications responsive to determining that the braking system has not been controlled to provide at least the braking force that is needed. The controller may direct the braking system to increase the braking force responsive to determining that the braking system has not been controlled to provide at least the braking force that is needed.

In one example, the vehicle may be a first vehicle and the sensing system may sense and output third data indicative movement of the first vehicle following departure of the operator from the first vehicle. The controller may determine whether a second vehicle may be towing or pushing the first vehicle. The controller may determine whether the second vehicle may be towing or pushing the first vehicle based on a location of the first vehicle that may be sensed by the sensing system

The above description is illustrative, and not restrictive. For example, the above-described embodiments (and/or aspects thereof) may be used in combination with each other. In addition, many modifications may be made to adapt a particular situation or material to the teachings of the inventive subject matter without departing from its scope. While the dimensions and types of materials described herein define the parameters of the inventive subject matter, they are exemplary embodiments. Other embodiments will be apparent to one of ordinary skill in the art upon reviewing the above description. The scope of the inventive subject matter should, therefore, be determined with reference to the appended claims, along with the full scope of equivalents to which such clauses are entitled.

This written description uses examples to disclose several embodiments of the inventive subject matter, including the best mode, and to enable one of ordinary skill in the art to practice the embodiments of inventive subject matter, including making and using any devices or systems and performing any incorporated methods. The patentable scope of the inventive subject matter is defined by the claims, and may include other examples that occur to one of ordinary skill in the art. Such other examples are intended to be within the scope of the claims if they have structural elements that do not differ from the literal language of the claims, or if they include equivalent structural elements with insubstantial differences from the literal languages of the claims.

A reference herein to a patent document or any other matter identified as prior art, is not to be taken as an admission that the document or other matter was known or that the information it contains was part of the common general knowledge as at the priority date of any of the claims.

## Claims

1. A vehicle safety system, comprising:
operational sensors configured to sense one or more operational characteristics of a vehicle and to output operational data based on the one or more operational characteristics that are sensed;
environmental sensors configured to sense one or more environmental characteristics of an environment external to the vehicle and to output environmental data based on the one or more environmental characteristics that are sensed; and
one or more processors configured to examine the operational data and the environmental data to determine whether the vehicle is in a safe state for an onboard operator of the vehicle to exit the vehicle while avoiding the vehicle rolling away from a stationary state, the one or more processors configured to examine the operational data and the environmental data to determine whether the vehicle is not in the safe state and to generate one or more notifications to the onboard operator in response to determining that the vehicle is not in the safe state.

2. The vehicle safety system of claim 1, wherein the operational sensors are configured to provide the operational data to the one or more processors and the environmental sensors are configured to provide the environmental data to the one or more processors after the operator leaves the vehicle.

3. The vehicle safety system of claim 2, wherein the one or more processors are configured to continue examining the operational data and the environmental data subsequent to the operator leaving the vehicle to determine whether the vehicle is no longer in the safe state, the one or more processors configured to implement one or more responsive actions in response to determining that the vehicle is no longer in the safe state subsequent to the operator leaving the vehicle.

4. The vehicle safety system of claim 3, wherein the one or more responsive actions include changing a brake setting of the vehicle.

5. The vehicle safety system of claim 1, wherein the operational sensors include one or more of a location sensor configured to output location information indicative of a location of the vehicle, an orientation sensor configured to output orientation information indicative of an orientation of the vehicle, or a pilot sensor configured to output presence information indicative of a presence or absence of the operator onboard the vehicle.

6. The vehicle safety system of claim 1, wherein the environmental sensors include one or more of a temperature sensor, a pressure sensor, a humidity sensor, or a precipitation sensor.

7. A method, comprising:
sensing operational conditions using one or more operational sensors, the operational conditions indicative of operation of a vehicle system;
sensing environmental conditions using one or more environmental sensors, the environmental conditions indicative of an ambient environment around the vehicle system;
examining the operational conditions and the environmental conditions to determine whether the vehicle system is in a safe state for an onboard operator of the vehicle system to exit the vehicle system while avoiding the vehicle system rolling away from a stationary state; and
generating one or more notifications to the operator in response to determining that the vehicle system is not in the safe state.

8. The method of claim 7, wherein the operational conditions and the environmental conditions continue to be sensed subsequent to the operator leaving the vehicle system.

9. The method of claim 8, further comprising:
implementing one or more responsive actions in response to determining that the vehicle system is no longer in the safe state subsequent to the operator leaving the vehicle system based on the operational conditions and the environmental conditions that are sensed subsequent to the operator leaving the vehicle system.

10. The method of claim 9, wherein implementing the one or more responsive actions includes one or more of changing a brake setting of the vehicle system, generating one or more notifications to an off-board system, or locking a door of the vehicle system.

11. The method of claim 7, wherein sensing the operational conditions is performed by one or more of a location sensor configured to output location information indicative of a location of the vehicle system, an orientation sensor configured to output orientation information indicative of an orientation of the vehicle system, a speed sensor configured to output speed information indicative of a moving speed of the vehicle system, an engine sensor configured to output engine information indicative of a first operational state of an engine of the vehicle system, a braking sensor configured to output information indicative of a second operational state of a brake of the vehicle system, an obstruction sensor configured to output obstruction information indicative of an obstruction along a path of the vehicle system, or a pilot sensor configured to output presence information indicative of a presence or absence of the operator onboard the vehicle system.

12. The method of claim 7, wherein sensing the environmental conditions is performed by one or more of a temperature sensor, a pressure sensor, a humidity sensor, or a precipitation sensor.

13. A vehicle safety system comprising:
a sensing system configured to sense and output first data indicative of a presence or absence of an operator onboard a vehicle, one or more operational conditions indicative of operation of the vehicle, and one or more environmental conditions indicative of an ambient environment outside the vehicle;
a logging system configured determine and output second data indicative of whether the operator has sufficient training to control a braking system of the vehicle responsive to the sensing system detecting the presence of the operator onboard the vehicle; and
a controller configured to examine the first data and the second data to determine whether the operator is authorized and qualified to control the braking system of the vehicle to prevent an unauthorized rollaway of the vehicle following departure of the operator from the vehicle, the controller configured to generate one or more notifications indicative of a safe state of the vehicle for the operator to leave the vehicle following engagement of the braking system based on the one or more operational conditions, the one or more environmental conditions, and the training of the operator.

14. The vehicle safety system of claim 13, wherein the controller is configured to generate the one or more notifications onboard the vehicle to notify the operator whether the operator can safely leave the vehicle.

15. The vehicle safety system of claim 13, wherein the controller is configured to generate the one or more notifications onboard the vehicle as an alarm to notify the operator that the operator cannot leave the vehicle in a current state of the vehicle.
